# EUROPÄISCHE PATENTSCHRIFT

(11) **EP 1 097 072 B1**
(45) Veröffentlichungstag und Bekanntmachung des Hinweises auf die Patenterteilung: **25.07.2007**
(21) Anmeldenummer: 00941897.1
(22) Anmeldetag: 02.05.2000
(51) Int. Cl.: B60T 13/567, B60T 13/52

(54) **BETÄTIGUNGSEINRICHTUNG FÜR DIE BREMSANLAGE EINES KRAFTFAHRZEUGES**
ACTUATING DEVICE FOR THE BRAKING SYSTEM OF A MOTOR VEHICLE
DISPOSITIF D'ACTIONNEMENT POUR LE SYSTEME DE FREINAGE D'UN VEHICULE A MOTEUR

(30) Priorität: 10.05.1999 DE 19921392
(43) Veröffentlichungstag der Anmeldung: 09.05.2001
(73) Patentinhaber: ZF Lemförder Metallwaren AG, 49441 Lemförde (DE)
(72) Erfinder: ERSOY, Metin, 65396 Walluf (DE); ROGOWSKI, Waldemar, 49078 Osnabrück (DE); GRÖGER, Dieter, 49401 Damme (DE)
(86) Internationale Anmeldenummer: PCT/DE2000/001338
(87) Internationale Veröffentlichungsnummer: WO 2000/068055

(56) Entgegenhaltungen:
- FR-A- 2 659 054
- GB-A- 2 235 026
- GB-A- 2 259 339
- US-A- 4 856 416

## Beschreibung

Die Erfindung betrifft eine Betätigungseinrichtung für die Bremsanlage eines Kraftfahrzeuges mit einem Pedalblock mit daran schwenkbar festgelegtem Bremspedal, einem Bremskraftverstärker mit zweigeteiltem Gehäuse und einer damit verbundenen Hauptbremszylinderbaugruppe zur hydraulischen Kraftbeaufschlagung der einzelnen Radbremsen des Kraftfahrzeuges.

Derartige Betätigungseinrichtungen sind im Stand der Technik in unterschiedlicher Ausgestaltung bekannt und werden prinzipiell in jedem Kraftfahrzeug eingesetzt. Die Ausgestaltung der einzelnen Komponenten der Betätigungseinrichtung differiert hierbei im Bezug auf Größe und Form sowie hinsichtlich zusätzlicher Anbauteile, es bestehen jedoch bei den einzelnen Komponenten auch grundsätzliche Übereinstimmungen. So wird das Bremskraftverstärkergehäuse aus Festigkeitsgründen aus Stahlblech gefertigt und beim Zusammenbau der Betätigungseinrichtung an den zumeist ebenfalls aus Metall gefertigten Pedalblock angeflanscht. An der dem Pedalblock abgewandten vorderen Seite des Bremskraftverstärkers wird die Hauptbremszylinderbaugruppe angeschraubt, die aus einem Hauptbremszylindergehäuse mit Innenbauteilen und einem Vorratsbehälter für die Bremshydraulikflüssigkeit besteht. Bei dem Hauptbremszylindergehäuse handeltes sich generell um ein spanend bearbeiteten Metallgußbauteil. Ergänzend für den Betrieb der gesamten Betätigungseinrichtung notwendige Anbauteile - wie beispielsweise Endschalter, Betätigungszüge, Rückholfedern oder Lagerungsbauteile - werden einzeln an der Gesamtbaugruppe montiert.

Sowohl die Materialauswahl als auch die Gestaltung der einzelnen Baugruppen, wie auch die üblicherweise getrennte Lieferung von Teilen durch Bremsenzulieferer und beispielsweise Hersteller der Pedalerie, führen zu einem hohen Herstellungs- und Montageaufwand und daraus resultierend zu hohen Kosten, wobei darüber hinaus eine heute vielfach in der Kraftfahrzeugindustrie angestrebte Reduzierung der Fertigungstiefe für einzelne Kraftfahrzeugbaugruppen nur schwierig zu realisieren ist.

Die FR-A-2 659 054 zeigt bereits eine Betätigungseinrichtung für die Bremsanlage eines Kraftfahrzeuges mit einem Pedalblock mit daran schwenkbar festgelegtem Bremspedal, einem Bremskraftverstärker mit zweigeteiltem Gehäuse und einer damit verbundenen Hauptbremszylinderbaugruppe zur hydraulischen Kraftbeaufschlagung der einzelnen Radbremsen des Kraftfahrzeuges. Der Pedalblock und das Bremskraftverstärker-Gehäusebodenteil, welches dem Pedalblock zugewandt ist, sind dabei einstückig aus Kunststoff geformt.

Die GB-A-2 235 026 zeigt bereits eine zusammengebaute Betätigungseinrichtung für die Bremsanlage eines Kraftfahrzeuges mit einem Pedalblock mit daran schwenkbar festgelegtem Bremspedal sowie einem Bremskraftverstärker mit zweigeteiltem Gehäuse und einer damit verbundenen Hauptbremszylinderbaugruppe zur hydraulischen Kraftbeaufschlagung der einzelnen Radbremsen des Kraftfahrzeuges. Der Pedalblock und das diesem zugewandte Bremskraftverstärker-Gehäusebodenteil sind dabei einstückig aus Kunststoff geformt. Das Bremskraftverstärkergehäuse kann als Kunststoffspritzteil ausgeführt werden. Separat hierzu ist ein Vorratsbehälter angeordnet.

Die GB-A-2 259 339 offenbart eine zusammengebaute Betätigungseinrichtung für die Bremsanlage eines Kraftfahrzeuges mit einem Bremskraftverstärker mit zweigeteiltem Gehäuse und einer damit verbunden Hauptbremszylinderbaugruppe zur hydraulischen Kraftbeaufschlagung der einzelnen Radbremsen des Kraftfahrzeuges. Das Bremskraftverstärkergehäuse ist dabei als Kunststoffspritzteil ausgebildet.

Technische Problemstellung der vorliegenden Erfindung ist es daher, eine Betätigungseinrichtung für die Bremsanlage eines Kraftfahrzeuges so zu gestalten, daß sowohl die Produktionskosten als auch die Einbaumaße herabgesetzt werden können. Darüber hinaus sollte eine Betätigungseinrichtung der erfindungsgemäßen Art eine erhebliche Reduzierung der Fertigungstiefe ermöglichen, um den Erfordernissen der modernen Kraftfahrzeugfertigung im Hinblick auf modularen Aufbau zu genügen.

Diese Problemstellung wird erfindungsgemäß durch eine Betätigungseinrichtung mit den Merkmalen nach Patentanspruch 1 gelöst. Bvorzugte Weiterbildungen sind in den Unteransprüchen angegeben.

Die Vereinigung des Bremskraftverstärkergehäuses mit dem Pedalblock bietet in mehrfacher Hinsicht entscheidende Vorteile gegenüber dem bisherigen Stand der Technik. Zum einen lassen sich aufgrund des Kunststoffmaterials in weitaus stärkerem Maße als bei der bisher vorgesehenen Blechbauweise ergänzend notwendige Bauteile und deren Aufnahmen auf einfachste Weise kostengünstig in das PedalblockBremskraftverstärkergehäusemodul integrieren. Es entsteht eine insgesamt äußerst kompakte Baueinheit, welche zusätzlich dadurch ergänzt wird, daß das gesamte Bremskraftverstärkergehäuse als Kunststoffspritzteil ausgebildet wird, wobei die angeschlossene Hauptbremszylinderbaugruppe mit einem Vorratsbehälter und einer Kolbeneinheit in das gesamte Kunststoffspritzteil integriert wird. Durch diese erfindungsgemäße Gestaltung entsteht eine vollständig vormontierbare Baugruppe, die zu einer Reduzierung der Einzelteile, niedrigeren Kosten und aufgrund des hohen Kunststoffmaterialeinsatzes, zu einer wesentlichen Gewichtsreduzierung führt. Darüber hinaus kann die gesamte Baugruppe fahrzeugunabhängig vormontiert und getestet werden, so daß bei der eigentlichen Endmontage des Kraftfahrzeuges die gesamte Betätigungseinrichtung nur noch an der Spritzwand des zugehörigen Kraftfahrzeuges befestigt werden muß und die Bremsleitungen zu den einzelnen Radbremsen des Kraftfahrzeuges angeschlossen werden müssen.

Es hat sich insbesondere als vorteilhaft erwiesen, daß erfindungsgemäß innerhalb der Kolbeneinheit der Hauptbremszylinderbaugruppe ein von dem Kunststoffspritzteil ummanteltes Hydraulikrohr zur Aufnahme der Hauptbremszylinderkolben angeordnet ist. Diese bauliche Gestaltung stellt eine zuverlässige Funktion des Hauptbremszylinders sowie eine entsprechend lange Lebensdauer sicher, andererseits bedeutet das Einspritzen des Hydraulikrohrs in das erfindungsgemäße Kunststoffspritzteil der Betätigungseinrichtung eine sehr kostengünstige Herstellung. Die erfindungsgemäße Gestaltung der Betätigungseinrichtung läßt sich darüber hinaus noch kostengünstiger gestalten, sofern man am Pedalblock ein gemeinsames Lagerelement für die Lagerung sowohl des Bremspedals als auch eines zusätzlichen Kupplungs- und/oder Gaspedals vorsieht. Durch diese Maßnahme entfallen die im Stand der Technik üblichen Einzellagerungen mit ihren Einzelteilen als auch die für die Montage der einzelnen Pedale notwendigen Kosten.

Es hat sich darüber hinaus als vorteilhaft erwiesen, daß der Pedalblock berührungslose Sensoren wie beispielsweise Hall-Sensoren induktive Sensoren zur Signalaufnahme der Winkelstellung von Bremspedal und zusätzlichem Kupplungs- oder Gaspedal aufweist, wobei die Signalübermittlung an nachgeschaltete Auswertungsbaugruppen einer Kraftfahrzeugelektronik durch eine zentrale Steckerbaugruppe erfolgt. Die berührungslosen (Hall)-Sensoren arbeiten prell- und verschleißfrei, sind elektronisch einstellbar und führen zu einer weiteren Funktionsintegration der gesamten Betätigungseinrichtung, wobei die Endprüfung des Gesamtmoduls weiter vereinfacht wird.

Darüber hinaus läßt sich das Betätigunsgefühl für die Verschwenkung der einzelnen Pedale dadurch verbessern, daß der Pedalblock eine oder mehrere Steuerkurven aufweist, auf dem/denen eine mit dem Bremspedal und/oder dem Kupplungs- und Gaspedal fest verbundene federbelastete Rolle bei Verschwenkung der Pedale abrollt.

Die Herstellung des Bremskraftverstärkergehäuses aus Kunststoff ermöglicht es darüberhinaus, in die Gehäusewandung des Bremskraftverstärkergehäuses Versorgungsleitungen für die Beaufschlagung des Bremskraftverstärkergehäuseinnenraumes mit Unterdruck oder Umgebungsdruck zu integrieren. Diese Maßnahme führt insbesondere bei zweistufigen Bremskraftverstärkern (Tandem-BKV) zu einer weiteren Reduzierung des Montageaufwandes.

Im folgenden werden zwei Ausführungsbeispiele des Gegenstandes der Erfindung anhand der beigefügten Zeichnungen näher erläutert. Es zeigen:
- Figur 1: eine seitliche Schnittdarstellung eines ersten Ausführungsbeispieles der erfindungsgemäßen Betätigungseinrichtung für die Bremsanlage eines Kraftfahrzeuges,
- Figur 2: eine Draufsicht auf die Betätigungseinrichtung aus Figur 1 von der dem Fahrgastraum zugewandten Seite und
- Figur 3: eine zweite Ausgestaltungsvariante des Gegenstandes der Erfindung in einer Seitenschnittdarstellung.

Die Betätigungseinrichtung für die Bremsanlage eines Kraftfahrzeuges weist einen Pedalblock 1 auf, einen Bremskraftverstärker 2 sowie einen mit einem Vorratsbehälter 4 versehene Hauptbremszylindergruppe 3 auf. An die Hauptbremszylindergruppe sind mehrere Bremsleitungen für die hydraulische Kraftbeaufschlagung der einzelnen Radbremsen angeschlossen, auf deren einzelne Darstellung aus Gründen der Übersichtlichkeit in den Zeichnungen verzichtet wurde.

Der Bremskraftverstärker 2 besteht im wesentlichen aus einer Gehäuseglocke 5 und einem Gehäusebodenteil 6, die gemeinsam in diesem Ausführungsbeispiel einen durch einen Kolben 7 in zwei Teilbereiche unterteilten Innenraum begrenzen.

Am Pedalblock 1 ist eine vorstehende Halterung 8 angeordnet, die ein gemeinsames Lagerelement 9 zur schwenkbaren Lagerung eines Bremspedals 10 und eines Kupplungspedals 11 aufnimmt. Der Pedalblock 1 selbst ist mit mehreren durch Durchgangsbohrungen 13 hindurchsteckbare Schrauben an einer nicht näher dargestellten Spritzwand eines Kraftfahrzeuges festlegbar. Pedalblock 1, Gehäusebodenteil 6 und Gehäuseglocke 5 sind als Kunststoffspritzteile ausgeführt, wobei der Pedalblock 1 und das Gehäusebodenteil 6 eines gemeinsame Baueinheit bilden.

Durch diese spezielle Ausgestaltung erfährt die gesamte Betätigungseinrichtung eine äußerste kompakte Bauform, die zu einer Längenverkürzung des Gesamtmoduls von Hauptbremszylindergruppe bis zum Bremspedal um ca. 15% oder absolut gesehen, von ungefähr 60 mm gegenüber aus dem Stand der Technik bekannten Betätigungseinrichtungen führt. Zusätzlich zu der Ausgestaltung des Bremskraftverstärkergehäuses 5, 6 und des Pedalblockes 1 ist auch die zur Hauptbremszylindergruppe 3 gehörende Kolbeneinheit 14 als Kunststoffspritzteil ausgeführt, wobei das Kunststoffspritzteil der Kolbeneinheit 14 auch den Vorratsbehälter 4 der Hauptbremszylinderbaugruppe 3 umfaßt. Innerhalb der Kolbeneinheit 14 ist in das Kunststoffspritzteil ein Hydraulikrohr 15 integriert, welches in einer innenliegenden Durchgangsbohrung 16 die Bremskolben 17, 18 zur hydraulischen Kraftbeaufschlagung der einzelnen Radbremsen aufnimmt. Die Verbindung zwischen Hauptbremszylinderbaugruppe 3, Bremskraftverstärker 2 und dem schwenkbaren Bremspedal 10 erfolgt durch eine Druckstange 19. Die Druckstange 19 ist mit dem Bremspedal 10 durch einen Bolzen 20 verbunden, welcher in einem Langloch 21 des Bremspedals 10 verschieblich aufgenommen ist. Diese spezielle Verbindung zwischen Druckstange 19 und Bremspedal 10 ermöglicht eine Geradführung 22 der Druckstange, was zu einer nochmaligen Reduzierung der Gesamtbaulänge der Betätigungseinrichtung führt.

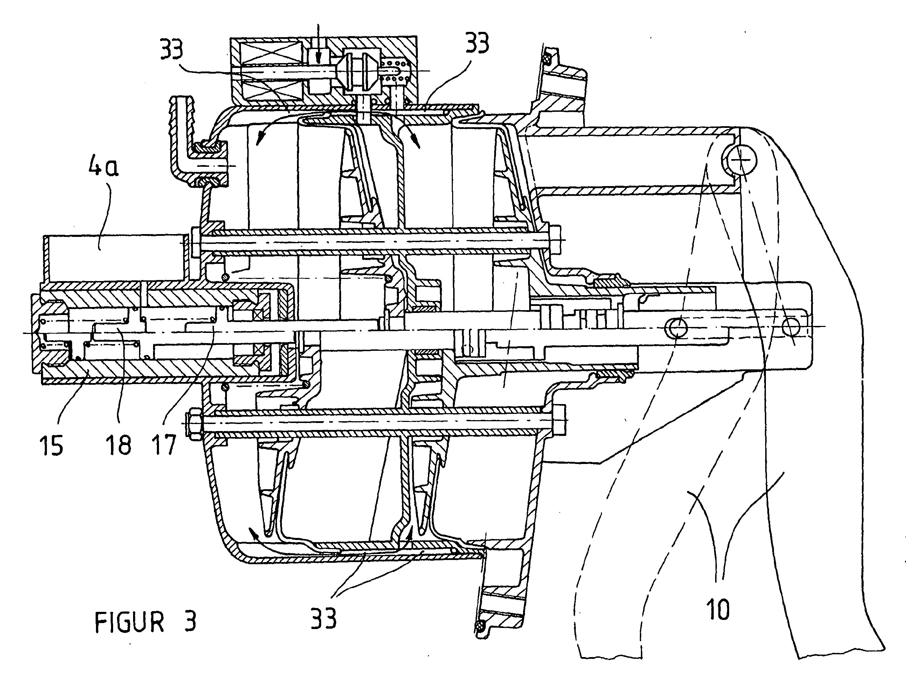

Die Reduzierung der Baulänge ermöglicht bei gleicher Gesamtbauraumnutzung die Verwendung eines Tandembremskraftverstärkers, wie in Figur 3 dargestellt; anstelle einer herkömmlichen einstufigen Variante, was wiederum die Unterstützungskräfte beim Betätigen des Bremspedals heraufsetzt und die Bedienung der Bremsanlage für den Benutzer erleichtert.

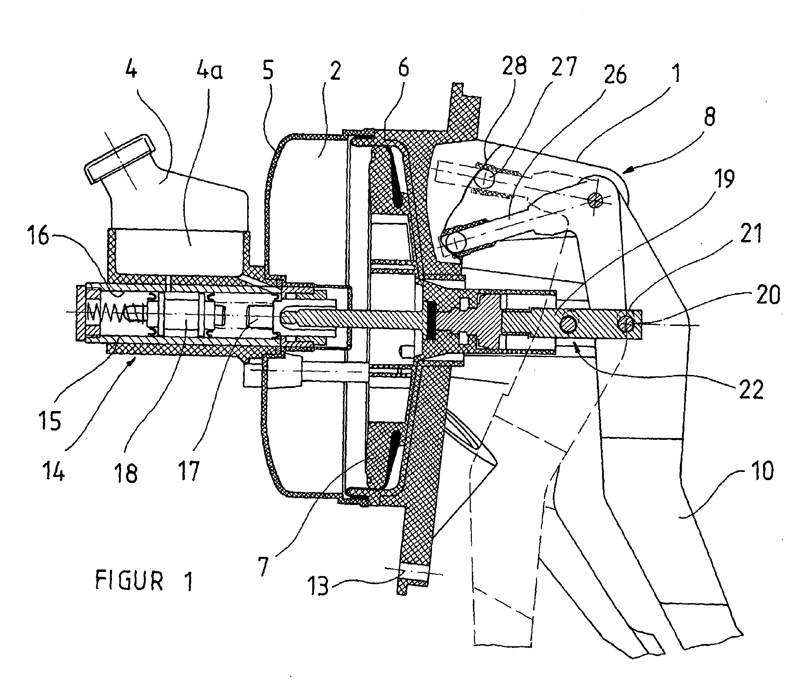

Aus Figur 1 ist darüberhinaus ersichtlich, daß am oberen Ende des Bremspedals 10, dem Lagerelement benachbart, ein fest mit dem Bremspedal 10 verbundenes Stiftelement 26 einstückig an dem Bremspedal 10 angeformt ist. Das Stiftelement 26 ist fingerförmig gestaltet und besitzt an seinem vorderen, freien, dem Bremspedal 10 abgewandten Ende mindestens eine Laufrolle 27, welche durch eine nicht näher dargestellte Druckfeder gegen eine Steuerkurve 28 am Pedalblock 1 gedrückt wird. Eine Verschwenkung des Bremspedals 10 führt zu einem Abrollen der Laufrolle 27 auf der Steuerkurve 28 und daraus resultierend zu einem je nach Schwenkwinkel unterschiedlichen Rückstellmoment und infolgedessen einem unterschiedlichen Betätigungsgefühl für das Bremspedal 10.

Die Gestaltung der Steuerkurve 28 in Verbindung mit dem Abrolleffekt der Laufrolle 27 erlaubt eine konstruktive Anpassung der Bremspedalbetätigung und eine Optimierung des Betätigungsgefühls.

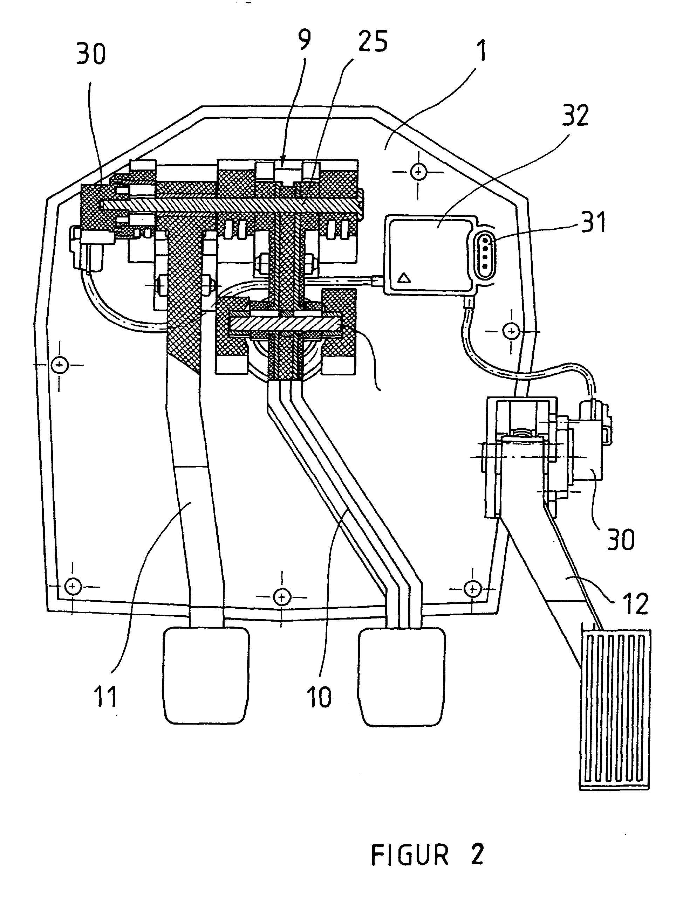

Aus der Figur 2 wird deutlich, daß das Kupplungspedal 11 und das Bremspedal 10 auf einer gemeinsamen Lagerachse 25 schwenkbar angeordnet sind, was gegenüber herkömmlichen Einzellagerungen zu einer Reduzierung der Einzelteile sowie des Montageaufwandes beiträgt.

Entsprechend einer weiteren vorteilhaften Ausgestaltung des Gegenstandes der Erfindung ist am Pedalblock 1 mindestens ein Hall-Sensor oder induktiver Sensor 30 zur berührungslosen Signalaufnahme der Winkelstellung des Bremspedales angeordnet. Ein derartiger Sensor 30 kann selbstverständlich auch zur berührungslosen Datenübermittlung der momentanen Stellung eines Gaspedales 12 verwendet werden, wie dies ebenfalls in der Figur 2 verdeutlicht ist.

Die Übermittlung der aufgenommenen Signale erfolgt durch eine zentrale Steckerbaugruppe 31, die die Signale unter Zwischenschaltung einer Auswertungsbaugruppe 32 an die Kraftfahrzeugelektronik übermittelt. Die Auswertungsbaugruppe 32 kann erfindungsgemäß in den Pedalblock integriert sein (siehe Figur 2) und die aufgenommenen Signale über einen CAN-BUS oder einen entsprechenden Prozessor für die Weiterverwertung innerhalb der Kraftfahrzeugelektronik umwandeln.

Die eingesetzten Hall-Sensoren oder induktiven Sensoren 30 sind erfindungsgemäß so ausgelegt, daß sie die üblicherweise im Stand der Technik verwendeten Schalter für Rücklicht, Shiftlock, einen evtl. vorhandenen Bremsassistenten und ähnliche ergänzende Sensorelemente ersetzen.

Die Herstellung des Bremskraftverstärkergehäuses aus Kunststoff ermöglicht es darüberhinaus, in die Gehäusewandung des Bremskraftverstärkergehäuses Versorgungsleitungen 33 für die Beaufschlagung des Bremskraftverstärkergehäuseinnenraumes mit Unterdruck oder Umgebungsdruck zu integrieren. In der Figur 3 ist eine erfindungsgemäße Ausführungsvariante mit einem zweistufigen Bremskraftverstärker (Tandem BKV) dargestellt, bei der in das Gehäuse die Versorgungsleitungen eingelassen sind. Diese Maßnahme führt insbesondere bei zweistufigen Bremskraftverstärkern zu einer weiteren Reduzierung des Montageaufwandes.

Aus den beigefügten Zeichnungen wird somit deutlich, daß die erfindungsgemäße Gestaltung eine kompakte Betätigungseinrichtung für die Bremsanlage eines Kraftfahrzeuges schafft, bei der gegenüber dem Stand der Technik die Zahl der verwendeten Einzelteile wesentlich reduziert ist und die eine Vormontage der gesamten Baueinheit inklusive der Endprüfung ermöglicht. Die gesamte Betätigungseinrichtung kann komplett an das Kraftfahrzeugendmontageband geliefert werden und wird nur mit Hilfe der durch die Bohrungen 13 hindurchgeführten Verschraubungen an der Karosserie des Kraftfahrzeuges befestigt. Darüber hinaus ist nur der Anschluß der Bremsleitungen an die Hauptbremszylinderbaugruppe 3 sowie das Aufstecken der Steckerbaugruppe 31 an eine korrespondierende Aufnahme auf Seiten der Karosserie notwendig.

Die kompakte Bauweise erlaubt die Verwendung eines Tandembremskraftverstärkers überall dort, wo bislang aufgrund beschränkter Einbauverhältnisse im Motorraum für einen derartigen zweistufigen Bremskraftverstärker kein Platz vorhanden war.

### Bezugszeichenliste:

- 1.: Pedalblock
- 2.: Bremskraftverstärker
- 3.: Hauptbremszylindergruppe
- 4.: Vorratsbehälter
- 4a.: Vorratsbehälterboden
- 5.: Gehäuseglocke
- 6.: Gehäusebodenteil
- 7.: Kolben
- 8.: Halterung
- 9.: Lagerelement
- 10.: Bremspedal
- 11.: Kupplungspedal
- 12.: Gaspedal
- 13.: Durchgangsbohrung
- 14.: Kolbeneinheit
- 15.: Hydraulikrohr
- 16.: Durchgangsbohrung
- 17.: Bremskolben
- 18.: Bremskolben
- 19.: Druckstange
- 20.: Bolzen
- 21.: Langloch
- 22.: Geradführung
- 25.: Lagerachse
- 26.: Stiftelement
- 27.: Laufrolle
- 28.: Steuerkurve
- 30.: Hall-Sensor
- 31.: Steckerbaugruppe
- 32.: Auswertungsbaugruppe
- 33.: Versorgungsleitung

## Patentansprüche

1. Betätigungseinrichtung für die Bremsanlage eines Kraftfahrzeuges mit einem Pedalblock mit daran schwenkbar festgelegtem Bremspedal, einem Bremskraftverstärker mit zweigeteiltem Gehäuse und einer damit verbundenen Hauptbremszylinderbaugruppe zur hydraulischen Kraftbeaufschlagung der einzelnen Radbremsen des Kraftfahrzeuges,
wobei der Pedalblock (1) und das Bremskraftverstärker-Gehäusebodenteil, welches dem Pedalblock (1) zugewandt ist, einstückig aus Kunststoff geformt sind
**dadurch gekennzeichnet, dass**
das gesamte Bremskraftverstärkergehäuse (5, 6) als Kunststoffspritzteil ausgebildet ist, wobei die Hauptbremszylinderbaugruppe (3) mit einem Vorratsbehälter (4) mit Vorratsbehälterboden (4a) und einer Kolbeneinheit (14) in das Kunststoffspritzteil integriert sind und innerhalb der Kolbeneinheit (14) ein von dem Kunststoffspritzteil ummanteltes Hydraulikrohr (15) zur Aufnahme der einzelnen Bremskolben (17) angeordnet ist.

2. Betätigungseinrichtung nach Anspruch 1,
**dadurch gekennzeichnet, daß**
der Pedalblock (1) ein gemeinsames Lagerelement (9) für die Lagerung des Bremspedals (10) und eines zusätzlichen Kupplungspedales (11) aufweist.

3. Betätigungseinrichtung nach einem der Ansprüche 1 oder 2,
**dadurch gekennzeichnet, daß**
der Pedalblock (1) berührungslose Sensoren, vorzugsweise Hall-Sensoren (30) zur Signalaufnahme der Winkelstellung des Bremspedales (10) und eines zusätzlichen Gaspedales (12) aufweist, wobei die Signalübermittlung an nachgeschaltete Auswertebaugruppen einer Kraftfahrzeugelektronik durch eine zentrale Steckerbaugruppe (31) erfolgt.

4. Betätigungseinrichtung nach Anspruch 3,
**dadurch gekennzeichnet, daß**
die Auswertungsbaugruppe (32) einen CAN-BUS zur Datenwandlung aufweist und im Pedalblock (1) integriert ist.

5. Betätigungseinrichtung nach einem der Ansprüche 1 bis4,
**dadurch gekennzeichnet, daß**
der Pedalblock (1) mindestens eine Steuerkurve (28) aufweist, auf der eine mit dem Bremspedal (10) fest verbundene federbelastete Laufrolle (27) bei Verschwenkung des Bremspedals (10) abrollt.

6. Betätigungseinrichtung nach einem der Ansprüche 1 bis 5,
**dadurch gekennzeichnet, daß**
Bremskraftverstärker (2) und Hauptbremszylinderbaugruppe (3) über eine gemeinsame Druckstange (19) betätigbar sind, wobei die Druckstange (19) im Pedalblock (1) durch eine Geradführung (22) gelagert und am Bremspedal (10) in einer Langlochbohrung (21) verschieblich aufgenommen ist.

7. Betätigungseinrichtung nach einem der Ansprüche 1 bis 6,
**dadurch gekennzeichnet, daß**
in die Gehäusewandung des Bremskraftverstärkergehäuses (5,6) aus Kunststoff Versorgungsleitungen (33) für die Beaufschlagung des Bremskraftverstärkergehäuseinnenraumes mit Unterdruck oder Umgebungsdruck integriert sind

## Claims

1. Actuating device for the braking system of a motor vehicle with a pedal block having a brake pedal pivotably fixed thereto, a brake booster having a two-part housing and a master brake cylinder assembly connected thereto for hydraulically applying force to the individual wheel brakes of the motor vehicle,
wherein the pedal block (1) and the brake booster housing bottom part, which faces the pedal block (1), are shaped in one piece from plastics material,
**characterised in that**
the entire brake booster housing (5, 6) is formed as a plastics injection-moulded part, wherein the master brake cylinder assembly (3) is integrated with a reservoir (4) having a reservoir bottom (4a) and a piston unit (14) into the plastics injection-moulded part, and a hydraulic tube (15), which is encased by the plastics injection-moulded part, is disposed inside the piston unit (14) for accommodating the individual brake pistons (17).

2. Actuating device according to Claim 1,
**characterised in that**
the pedal block (1) comprises a common bearing element (9) for mounting the brake pedal (10) and an additional clutch pedal (11).

3. Actuating device according to either of Claims 1 and 2,
**characterised in that**
the pedal block (1) comprises non-contacting sensors, preferably Hall sensors (30) for picking up signals indicative of the angular position of the brake pedal (10) and an additional accelerator pedal (12), wherein the signal transmission to downstream evaluation assemblies of motor vehicle electronics takes place through a central plug assembly (31).

4. Actuating device according to Claim 3,
**characterised in that**
the evaluation assembly (32) comprises a CAN bus for data conversion and is integrated into the pedal block (1).

5. Actuating device according to any one of Claims 1 to 4,
**characterised in that**
the pedal block (1) comprises at least one control cam (28) on which a spring-loaded roller (27), which is firmly connected to the brake pedal (10), rolls when the brake pedal (10) pivots.

6. Actuating device according to any one of Claims 1 to 5,
**characterised in that**
the brake booster (2) and the master brake cylinder assembly (3) can be actuated via a common plunger rod (19), wherein the plunger rod (19) is mounted in the pedal block (1) by means of a straight-line mechanism (22) and is accommodated in a displaceable manner in an elongated hole (21) at the brake pedal (10).

7. Actuating device according to any one of Claims 1 to 6,
**characterised in that**
supply lines (33) for admitting a negative pressure or ambient pressure to the interior space of the brake booster are integrated into the housing wall of the brake booster housing (5, 6) made of plastics material.

## Revendications

1. Dispositif d'actionnement pour le système de freinage d'un véhicule automobile comportant un bloc-pédale avec une pédale de frein fixée pivotante sur celui-ci, un servofrein avec boîtier en deux parties et un ensemble cylindre de frein principal relié à celui-ci pour faire agir une force hydraulique sur les différents freins de roue du véhicule automobile,
dans lequel le bloc-pédale (1) et la partie de fond du boîtier du servofrein, qui est tournée vers le bloc-pédale (1), sont formés d'une seule pièce en matière plastique,
**caractérisé en ce que**
l'ensemble du boîtier du servofrein (5, 6) est réalisé sous la forme d'une pièce en matière plastique moulée par injection, l'ensemble cylindre de frein principal (3) étant intégré avec un réservoir (4) avec fond de réservoir (4a) et une unité à pistons (14), dans la pièce en matière plastique moulée par injection, et à l'intérieur de l'unité à pistons (14) étant disposé un tube hydraulique (15), gainé de la pièce en matière plastique moulée par injection, pour recevoir les différents pistons de frein (17).

2. Dispositif d'actionnement selon la revendication 1,
**caractérisé en ce que**
le bloc-pédale (1) comporte un élément de palier (9) commun pour supporter la pédale de frein (10) et une pédale d'embrayage (11) supplémentaire.

3. Dispositif d'actionnement selon l'une des revendications 1 ou 2,
**caractérisé en ce que**
le bloc-pédale (1) comporte des capteurs statiques, de préférence des capteurs à effet Hall (30) pour recevoir les signaux de la position angulaire de la pédale de frein (10) et d'une pédale d'accélérateur (12) supplémentaire, la transmission des signaux à des ensembles d'évaluation aval d'un équipement électronique de véhicule automobile s'effectuant par un ensemble connecteur (31) central.

4. Dispositif d'actionnement selon la revendication 3,
**caractérisé en ce que**
l'ensemble d'évaluation (32) comporte un bus CAN pour la conversion des données et est intégré dans le bloc-pédale (1) .

5. Dispositif d'actionnement selon l'une des revendications 1 à 4,
**caractérisé en ce que**
le bloc-pédale (1) comporte au moins une came de commande (28) sur laquelle roule un galet de roulement (27) solidaire de la pédale de frein (10) et soumis à l'action d'un ressort, lors du pivotement de la pédale de frein (10).

6. Dispositif d'actionnement selon l'une des revendications 1 à 5,
**caractérisé en ce que**
le servofrein (2) et l'ensemble cylindre de frein principal (3) peuvent être actionnés par l'intermédiaire d'une tige de compression (19) commune, la tige de compression (19) étant montée dans le bloc-pédale (1) par un guide rectiligne (22) et étant reçue sur la pédale de frein (10) de manière à coulisser dans un trou oblong (21) .

7. Dispositif d'actionnement selon l'une des revendications 1 à 6,
**caractérisé en ce que**
dans la paroi du boîtier (5, 6) du servofrein en matière plastique sont intégrées des conduites d'alimentation (33) pour faire agir sur le volume intérieur du boîtier du servofrein une dépression ou la pression ambiante.
